# EUROPEAN PATENT APPLICATION

(11) **EP 4 808 224 A1**
(43) Date of publication of application: **16.09.2026**
(21) Application number: 24896242.5
(22) Date of filing: 11.11.2024
(51) Int. Cl.: H04W 52/04

(54) **COMMUNICATION METHOD, COMMUNICATION APPARATUS AND MEDIUM**

(30) Priority: 30.11.2023 CN 202311636263
(71) Applicant: Huawei Technologies Co., Ltd., Shenzhen, Guangdong 518129 (CN)
(72) Inventor: ZHENG, Haina, Shenzhen, Guangdong 518129 (CN); YAO, Chuting, Shenzhen, Guangdong 518129 (CN); FAN, Liangliang, Shenzhen, Guangdong 518129 (CN); XUE, Lixia, Shenzhen, Guangdong 518129 (CN); XU, Haibo, Shenzhen, Guangdong 518129 (CN)
(74) Representative: Goddar, Heinz J.
(86) International application number: PCT/CN2024/131214
(87) International publication number: WO 2025/113151

(57) **Abstract**

Embodiments of this application disclose a communication method, a communication apparatus, and a medium, applied to the communication field, to indicate synchronization signal power within a coverage area of a satellite. The method in embodiments of this application includes: receiving broadcast information, where the broadcast information includes a corresponding value of a target parameter in one or more terrestrial geographic location regions; and obtaining a first value based on a target region and the broadcast information, where the target region is the terrestrial geographic location region in which a terminal device is located, the first value is a corresponding value of the target parameter in the target region, and the first value indicates synchronization signal power corresponding to the target region. In embodiments of this application, the terminal device can obtain corresponding synchronization signal power based on different terrestrial geographic location regions in which the terminal device is located.

## Description

This application claims priority to Chinese Patent Application No. 202311636263.7, filed with the China National Intellectual Property Administration on November 30, 2023 and entitled "COMMUNICATION METHOD, COMMUNICATION APPARATUS, AND MEDIUM", which is incorporated herein by reference in its entirety.

### TECHNICAL FIELD

Embodiments of this application relate to the communication field, and in particular, to a communication method, a communication apparatus, and a medium.

### BACKGROUND

In a non-terrestrial network (non-terrestrial network, NTN) network, satellite communication provides a wider coverage area than a terrestrial cellular network, and features of a long communication distance, high deployment flexibility, immunity to geographic environments, natural disasters, and climate conditions, and the like. Therefore, the satellite communication is widely applied to fields such as aerospace, maritime communication, and military communication. Satellites are introduced into a 6th generation mobile communication technology (6th generation mobile communication technology, 6G) to provide communication connections for regions that are difficult to be covered by the terrestrial cellular network, and support access of more devices, so as to implement an air-space-ground integrated network and provide comprehensive communication services for user equipment.

When performing uplink power control, a terminal device needs to obtain synchronization signal and PBCH block (synchronization signal and PBCH block, SSB) power, that is, energy per resource element (energy per resource element, EPRE), from a system information block (system information block, SIB) broadcast by a base station, and calculate a path loss based on the EPRE and reference signal received power (reference signal received power, RSRP). In an existing new radio (new radio, NR) standard, transmit power for all SSBs sent by a base station is the same.

Because a coverage area of a satellite is much wider than that of a terrestrial cellular network, a path loss of a signal transmitted from the satellite to an edge region of the coverage differs significantly from a path loss to a subsatellite point. Therefore, in a conventional technology, it is difficult to ensure communication performance of SSB transmission within a coverage area of a satellite.

### SUMMARY

Embodiments of this application provide a communication method, a communication apparatus, and a medium, applied to the communication field, to improve communication performance of SSB sending.

A first aspect of embodiments of this application provides a communication method. Optionally, the method may be performed by a terminal device, or by a component or an apparatus (for example, a processor, a chip, or a chip system) used in the terminal device, or by a logical module or software that can implement all or some functions of the terminal device. The terminal device is used as an example. When the terminal device is located in a coverage area of a satellite, the satellite serves as an NTN node, and broadcasts to the terminal device within the coverage area. In the method, the terminal device receives a broadcast message from the NTN node. The broadcast message includes a mapping relationship between a target parameter and a terrestrial geographic location region, that is, a corresponding value of a target parameter in one or more terrestrial geographic location regions. The terminal device determines a value of the target parameter in a target region, that is, a first value, based on the mapping relationship and the target region in which the terminal device is located. The first value indicates synchronization signal power corresponding to the target region.

In this embodiment of this application, because the broadcast information includes the value of the target parameter in the one or more terrestrial geographic location regions, the terminal device may obtain the corresponding first value from the broadcast message based on the region in which the terminal device is located, where the first value indicates synchronization signal power needed by the terminal device, so that the NTN node may send synchronization signals by using different transmit power for different terrestrial geographic location regions. In addition, the terminal device may obtain the corresponding synchronization signal power. Communication performance of sending an SSB is improved, so that the terminal device obtains corresponding power information.

A second aspect of embodiments of this application provides a communication method. Optionally, the method may be performed by an NTN node, or by a component (for example, a processor, a chip, or a chip system) used in the NTN node, or by a logical module or software that can implement all or some functions of the NTN node. In the method, the NTN node broadcasts to a terminal device within a ground coverage area, and sends broadcast information to the terminal device. The broadcast information includes a corresponding value of a target parameter in one or more terrestrial geographic location regions. The value indicates power for a synchronization signal sent by the NTN node to the region.

A third aspect of embodiments of this application provides a communication apparatus. The communication apparatus may be a terminal device, or may be a component or an apparatus (for example, a processor, a chip, or a chip system) used in the terminal device, or may be a logical module or software that can implement all or some functions of the terminal device. The communication apparatus includes:
a receiving unit, configured to receive broadcast information, where the broadcast information includes a corresponding value of a target parameter in one or more terrestrial geographic location regions; and
an obtaining unit, configured to obtain a first value based on a target region and the broadcast information, where the target region is a terrestrial geographic location region in which the terminal device is located, the first value is a corresponding value of the target parameter in the target region, and the first value indicates synchronization signal power corresponding to the target region.

According to the first aspect and the third aspect of embodiments of this application, optionally, the terminal device receives ephemeris information from an NTN node, where the ephemeris information is used by the terminal device to determine an orbit and a position of the NTN node. The terminal device obtains a specific coverage area of the terrestrial geographic location region based on the ephemeris information, and obtains, based on a global navigation satellite system (global navigation satellite system, GNSS) of the terminal device, location information of the terminal device on the ground. The terminal device obtains terrestrial geographic location region information, where the terrestrial geographic location region information indicates a specific location of a terrestrial geographic location region in a mapping relationship. The terminal device determines, based on the ephemeris information, terrestrial location information, and the terrestrial geographic location region information, that the terminal device is located in the target region in the one or more terrestrial geographic location regions within the coverage area of the NTN node, and obtains, from the broadcast message, the first value of the target parameter in the target region.

In this embodiment of this application, the terminal device can more accurately determine, based on the ephemeris information and the terrestrial location information, the terrestrial geographic location region in which the terminal device is located, to obtain the corresponding synchronization signal power.

According to the first aspect and the third aspect of embodiments of this application, optionally, after obtaining the synchronization signal power corresponding to the target region, the terminal device calculates a path loss of a downlink signal based on the synchronization signal power. Further, the downlink path loss is reported to the NTN node.

In this embodiment of this application, according to the first aspect and the third aspect of embodiments of this application, the terminal device may calculate the downlink path loss based on the obtained synchronization signal power, to implement uplink power control of the terminal device.

According to the first aspect and the third aspect of embodiments of this application, optionally, the terminal device further receives an SSB from the NTN node.

A fourth aspect of embodiments of this application provides a communication apparatus. The communication apparatus may be an NTN node, or may be a component (for example, a processor, a chip, or a chip system) used in the NTN node, or may be a logical module or software (for example, a central unit (central unit, CU), a distributed unit (distributed unit, DU), or a wireless unit (radio unit, RU)) that can implement all or some functions of the NTN node. The communication apparatus includes:
a sending unit, configured to send broadcast information, where the broadcast information includes a corresponding value of a target parameter in one or more terrestrial geographic location regions, and the value indicates synchronization signal power corresponding to the one or more terrestrial geographic location regions.

According to the second aspect and the fourth aspect of embodiments of this application, optionally, the NTN node sends ephemeris information to a terminal device, where the ephemeris information is used by the terminal device to determine a terrestrial geographic location region in which the terminal device is located, to obtain corresponding synchronization signal power.

According to the second aspect and the fourth aspect of embodiments of this application, optionally, the NTN node receives a measurement result from the terminal device, where the measurement result includes a downlink path loss obtained by the terminal device through calculation.

According to the second aspect and the fourth aspect of embodiments of this application, optionally, the NTN node sends an SSB to the terminal device.

According to the first aspect to the fourth aspect of embodiments of this application, optionally, the terrestrial geographic location region may be represented by an elevation angle and an azimuth angle of the NTN node relative to the terrestrial geographic location region. Specifically, there is an included angle between a line connecting the NTN node and a subsatellite point and a line connecting the NTN node and a center point of the terrestrial geographic location region. The included angle is the elevation angle of the NTN node relative to the terrestrial geographic location region. Then, a specific location of the center point of the terrestrial geographic location region may be determined based on the azimuth angle of the center point of the terrestrial geographic location region relative to the subsatellite point.

According to the first aspect to the fourth aspect of embodiments of this application, optionally, the terminal device may further obtain a size of a coverage area of the terrestrial geographic location region. Specifically, the size of the coverage area of the terrestrial geographic location region may be represented by a radius of the terrestrial geographic location region. The terminal device obtains reference coordinates and the radius of the terrestrial geographic location region, or the terminal device obtains the elevation angle and the azimuth angle of the NTN node relative to the terrestrial geographic location region and the radius of the terrestrial geographic location region, to determine the terrestrial geographic location region in which the terminal device is located.

In this embodiment of this application, the size of the specific coverage area of the terrestrial geographic location region is obtained, and then with reference to reference coordinates of the center point of the terrestrial geographic location region or the elevation angle and the azimuth angle of the NTN node relative to the terrestrial geographic location region, the terminal device can locate the terrestrial geographic location region in which the terminal device is located, to obtain the corresponding synchronization signal power.

According to the first aspect to the fourth aspect of embodiments of this application, optionally, the target parameter in the broadcast information may be energy per resource element (energy per resource element, EPRE), a scale factor, or an offset. The scale factor indicates a proportional relationship between EPRE corresponding to each terrestrial geographic location region and a specific fixed EPRE value. The offset indicates a difference between the EPRE corresponding to each terrestrial geographic location region and a specific fixed EPRE value.

According to the first aspect to the fourth aspect of embodiments of this application, optionally, when the target parameter is a scale factor or an offset, the broadcast information further includes a preset second value, where the second value is used as a reference value. The terminal device obtains, through calculation based on the first value and the second value, the synchronization signal power corresponding to the target region.

According to the first aspect to the fourth aspect of embodiments of this application, optionally, the broadcast information includes an emergency requirement level. The emergency requirement level indicates an emergency degree of a signal requirement in the terrestrial geographic location region. The mapping relationship in the broadcast information indicates values of target parameters corresponding to the one or more terrestrial geographic location regions at different emergency requirement levels.

According to the first aspect to the fourth aspect of embodiments of this application, optionally, the terrestrial geographic location region may be represented by reference coordinates. Specifically, the reference coordinates may be longitude and latitude of a reference point, and the reference point may be the center point of the terrestrial geographic location region. The terminal device may determine, based on longitude and latitude coordinates of the terminal device, a center point of a specific terrestrial geographic location region that the terminal device is closer to, to determine a specific terrestrial geographic location region in which the terminal device is located.

A fifth aspect of embodiments of this application provides a communication apparatus. The communication apparatus may be a terminal device, or may be a component or an apparatus (for example, a processor, a chip, or a chip system) used in the terminal device, or may be a logical module or software that can implement all or some functions of the terminal device. Alternatively, the communication apparatus may be an NTN node, or may be a component (for example, a processor, a chip, or a chip system) used in the NTN node, or may be a logical module or software (for example, a CU, a DU, or an RU) that can implement all or some functions of the NTN node. The communication apparatus includes:
a processor, configured to execute a program, to cause the communication apparatus to perform the method according to any one of the first aspect or the second aspect and the possible implementations of the first aspect or the second aspect.

Optionally, the communication apparatus further includes a memory. The processor is coupled to the memory. The memory is configured to store the program.

A sixth aspect of embodiments of this application provides a chip or a chip system. The chip or the chip system includes at least one processor and a communication interface. The communication interface and the at least one processor are interconnected through a line. The at least one processor is configured to run a computer program or instructions, to perform the communication method according to any one of the possible implementations of the first aspect and the second aspect.

The communication interface in the chip may be an input/output interface, a pin, a circuit, or the like.

In a possible implementation, the chip or the chip system described above in this application further includes at least one memory, and the at least one memory stores instructions. The memory may be a storage unit in the chip, for example, a register or a cache, or may be a storage unit, for example, a read-only memory or a random access memory, of the chip.

A seventh aspect of embodiments of this application provides a communication system, including a communication apparatus performing any one of the first aspect and the possible implementations of the first aspect and a communication apparatus performing any one of the second aspect and the possible implementations of the second aspect.

An eighth aspect of embodiments of this application provides a computer-readable storage medium, including instructions. When the instructions are run on a computer, the computer is caused to perform the method according to the first aspect, or the computer is caused to perform the method according to the second aspect.

A ninth aspect of embodiments of this application provides a computer program product including instructions. When the computer program product runs on a computer, the computer is caused to perform the method according to the first aspect, or the computer is caused to perform the method according to the second aspect.

### BRIEF DESCRIPTION OF DRAWINGS

FIG. 1 is a diagram of a network architecture according to an embodiment of this application;
FIG. 2 is a diagram of a position of an NTN node relative to the ground according to an embodiment of this application;
FIG. 3 is a diagram of an embodiment of a communication method according to an embodiment of this application;
FIG. 4 is a diagram of an embodiment of a representation manner of terrestrial geographic location regions according to an embodiment of this application;
FIG. 5 is a diagram of another embodiment of a representation manner of terrestrial geographic location regions according to an embodiment of this application;
FIG. 6 is a diagram of an embodiment of a communication apparatus according to an embodiment of this application;
FIG. 7 is a diagram of another embodiment of a communication apparatus according to an embodiment of this application;
FIG. 8 is a diagram of another embodiment of a communication apparatus according to an embodiment of this application; and
FIG. 9 is a diagram of another embodiment of a communication apparatus according to an embodiment of this application.

### DESCRIPTION OF EMBODIMENTS

Embodiments of this application provide a communication method, a communication apparatus, and a medium, applied to the communication field, to indicate synchronization signal power within a coverage area of a satellite.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are used to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, product, or device.

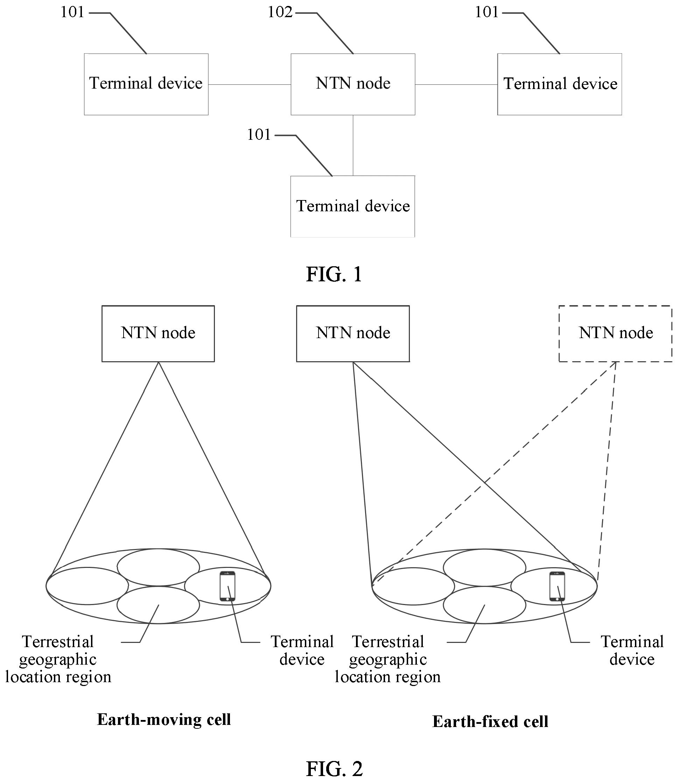

Refer to FIG. 1. The following briefly describes a network architecture on which a communication method in an embodiment of this application is based.

As shown in FIG. 1, a plurality of terminal devices 101 are connected to an NTN node 102, receive a SIB broadcast by the NTN node, and obtain information from the SIB. When the terminal device performs uplink power control, the terminal device needs to obtain, from the SIB, power for sending an SSB by the NTN node, and obtains a path loss of a downlink signal through calculation based on SSB power and RSRP, to determine, based on the downlink path loss, power for transmitting an uplink signal.

The terminal device in FIG. 1 may be located in a coverage area of a beam or a cell of a network device. The terminal device may perform air interface communication with the network device through an uplink (uplink, UL) or a downlink (downlink, DL). For example, the terminal device may send uplink data to the network device in an UL direction through a physical uplink shared channel (physical uplink shared channel, PUSCH), and the network device may send downlink data to the terminal device in a DL direction through a physical downlink shared channel (physical downlink shared channel, PDSCH). The terminal device may be a terminal device that supports new radio, may access the NTN node through an air interface, and initiates a service such as a call or Internet access. The terminal device may also be referred to as user equipment (user equipment, UE), a mobile station (mobile station, MS), a mobile terminal (mobile terminal, MT), or the like. Specifically, the terminal device in FIG. 1 may be a mobile phone, a tablet computer, or a computer having a wireless transceiver function. Alternatively, the terminal device may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. This is not specifically limited herein.

For example, the NTN node may be an access network device carried on a flight platform. When the access network device is carried on the flight platform, the access network device moves synchronously with the flight platform. The access network device and the flight platform may be considered as a whole. In this case, the flight platform may be considered as an access network device, or may be described as that the flight platform works in a regenerative mode (regenerative), in other words, the flight platform has a function of the access network device. In addition, a communication link between the flight platform and the terminal device may be referred to as a service link (service link). When a communication system includes a plurality of flight platforms, communication may be performed between the flight platforms through an Xn interface. In actual application, the network device may alternatively be an access network device that is distributed on a flight platform based on a distributed unit (distributed unit, DU), or may be directly used as the flight platform. This is not specifically limited herein.

The foregoing access network device may be any device having a wireless transceiver function, is mainly configured to implement functions such as a wireless physical control function, resource scheduling, radio resource management, radio access control, and mobility management, and provides a reliable wireless transmission protocol, a data encryption protocol, and the like. Specifically, the access network device may be a device that supports wired access or may be a device that supports wireless access. For example, the access network device may be an access network (access network, AN) device, a radio access network (radio access network, RAN) device, or an open radio access network (open radio access network, O-RAN) device. The RAN device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, a wireless fidelity (wireless fidelity, Wi-Fi) system, a long range radio (long range radio, LoRa) system, or an access node in an Internet of Vehicles system. Alternatively, the RAN device may be a module or unit that completes some functions of a base station, for example, may be a CU, a DU, or an RU. The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all of functions of a physical layer. For detailed descriptions of the foregoing protocol layers, refer to technical specifications related to the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings thereof. For example, in an ORAN system, the CU may also be referred to as an O-CU (open CU), the DU may also be referred to as an O-DU, and the RU may also be referred to as an O-RU. Any one of the CU (or a CU-CP or a CU-UP), the DU, and the RU in this application may be implemented by a software module, a hardware module, or a combination of a software module and a hardware module.

The flight platform may be an aircraft, for example, a satellite or an uncrewed aerial vehicle. For example, the flight platform may include a geostationary earth orbit (geostationary earth orbit, GEO) satellite, a non-geostationary earth orbit satellite, a low-earth orbit (low-earth orbit, LEO) satellite, a medium-earth orbit (medium-earth orbit, MEO) satellite, a geostationary earth orbit satellite, an uncrewed aerial system platform, a high-earth orbit satellite, or the like. This is not specifically limited herein.

The low-earth orbit satellite and the medium-earth orbit satellite may have their own motion trajectories, and a plurality of satellites usually cooperate to provide communication for a fixed region. The high-earth orbit satellite is usually in a stationary state, and one or a few high-orbit satellites provide communication for a fixed region.

FIG. 2 shows a relative position relationship between an NTN node and the ground. Depending on a satellite orbit in which the NTN node is located, a coverage area of the NTN node is referred to as an earth-moving cell or an earth-fixed cell. For the earth-moving cell, an NTN node is stationary relative to the ground, in other words, the NTN node moves synchronously with the ground. Therefore, the NTN node corresponding to the earth-moving cell remains unchanged. For the earth-fixed cell, an NTN node moves relative to the ground. Therefore, the NTN node corresponding to the earth-fixed cell changes with movement of the NTN node. A terrestrial geographic location region is a part of a region in the earth-moving cell or the earth-fixed cell, and a specific location of the terrestrial geographic location region may be represented in a plurality of manners. A terrestrial geographic location region in which a terminal device is located is a target region.

Currently, power for all SSBs sent by a base station is the same. Because a coverage area of a satellite is much wider than that of a terrestrial cellular network, a path loss of a signal transmitted from the satellite to an edge region of the coverage differs significantly from a path loss to a subsatellite point. If transmit power for the SSBs is low, transmission performance of an SSB in the edge region of the coverage cannot be ensured. If the transmit power for the SSBs is high, a waste of power in a central region is caused.

To adapt to a situation in which the coverage area of the satellite is much wider than that of the terrestrial cellular network, the SSBs may be sent by using flexible power. For example, when the SSB corresponding to the edge region of the coverage is sent, the transmit power for the SSB is increased, while in the central region, relatively low transmit power is used.

However, when performing some procedures related to power control, the terminal device needs to learn of power for sending an SSB by the base station. For example, when performing uplink power control, the terminal device needs to obtain SSB power, that is, EPRE, from a SIB, and calculate a path loss based on the EPRE and RSRP.

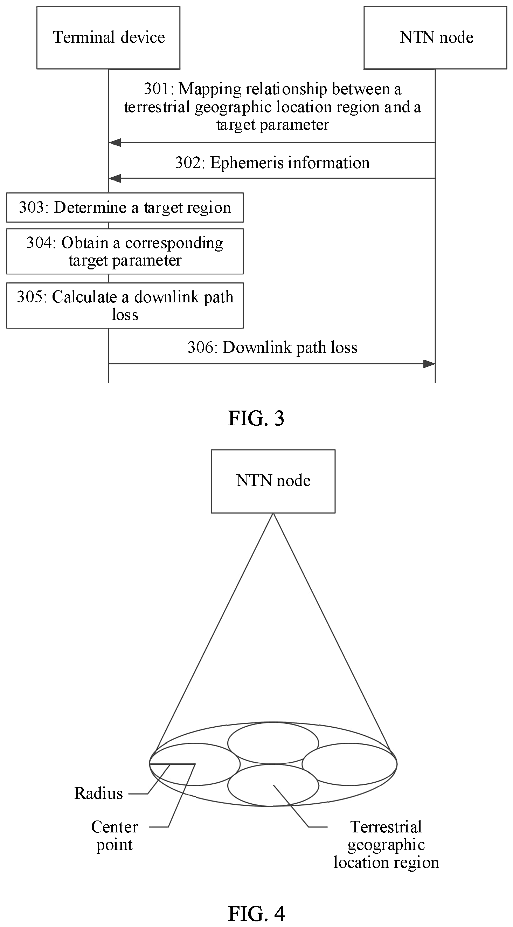

Therefore, embodiments of this application provide a method. Refer to FIG. 3. A communication method in an embodiment of this application includes the following steps.

301: An NTN node sends broadcast information to a terminal device. Correspondingly, the terminal device receives the broadcast information. The broadcast information includes a corresponding value of a target parameter in one or more terrestrial geographic location regions.

In a manner, the broadcast information indicates a mapping relationship between the terrestrial geographic location region and the target parameter.

The NTN node sends the broadcast information to the terminal device, where the broadcast information includes the mapping relationship between the terrestrial geographic location region and the target parameter. The NTN node may send the broadcast information to all terminal devices within an entire coverage area, or may send the broadcast information to terminal devices in a specific terrestrial geographic location region, and a plurality of terminal devices in the terrestrial geographic location region receive the same broadcast information. The broadcast information includes one or more terrestrial geographic location regions within the coverage area of the NTN node and a value of a target parameter corresponding to the one or more terrestrial geographic location regions.

For example, the mapping relationship between the terrestrial geographic location region and the target parameter is shown in Table 1. The target parameter is EPRE. Values in the table shown in this embodiment of this application are merely examples, and do not represent actual values.

**Table 1**

| **Terrestrial geographic location region** | **EPRE** |
|---|---|
| Region 1 | 10 dBm |
| Region 2 | 20 dBm |
| Region 3 | 30 dBm |
| Region 4 | 40 dBm |

As shown in Table 1, the broadcast information includes identifiers of terrestrial geographic location regions and corresponding values of the target parameter, for example, region 1 and a value of the EPRE corresponding to the region. A correspondence between an identifier of a terrestrial geographic location region and the terrestrial geographic location region may be predefined in a protocol, or may be indicated to the terminal device in advance, or may be indicated to the terminal device in the broadcast information. The terrestrial geographic location region may be indicated through terrestrial geographic location region information. In other words, the terrestrial geographic location region information indicates a specific range of the terrestrial geographic location region.

In a possible implementation, the identifier of the terrestrial geographic location region may be replaced with the terrestrial geographic location region information.

The terrestrial geographic location region information may be specifically reference coordinates of a center point of a region and a radius of the region. Details are shown in Table 2.

**Table 2**

| **Identifier** | **Terrestrial geographic location region information** | |
|---|---|---|
| | **Reference coordinates (longitude and latitude)** | **Radius** |
| Region 1 | 120°E, 30°N | 10 km |
| Region 2 | 120°E, 25°N | 10 km |
| Region 3 | 125°E, 30°N | 10 km |
| Region 4 | 125°E, 25°N | 10 km |

As shown in Table 2, a terrestrial geographic location region may be represented by reference coordinates of a center point of the region and a radius of the region. FIG. 4 shows a representation manner of terrestrial geographic location regions. The terrestrial geographic location region information includes reference coordinates of a center point of a terrestrial geographic location region and a radius of the region. The reference coordinates may be represented by longitude and latitude of a reference point in the terrestrial geographic location region. The reference point may be the center point of the region, or may be another point in the region. This is not specifically limited herein. The terminal device determines the range and a specific location of the terrestrial geographic location region based on the terrestrial geographic location region information, and determines coordinates of the terminal device based on a GNSS, to determine a range of a specific terrestrial geographic location region which the terminal device is located in, so as to determine a target region.

In actual application, the terrestrial geographic location region information may include reference coordinates of a center point of a terrestrial geographic location region. The terminal device calculates distances of the terminal device relative to all center points based on coordinates of the terminal device and reference coordinates of the center points, and selects a terrestrial geographic location region corresponding to a center point closest to the terminal device as the target region.

The terrestrial geographic location region information may further be specifically an azimuth angle and an elevation angle of the center point of the region relative to the NTN node and the radius of the region. Details are shown in Table 3.

**Table 3**

| **Identifier** | **Terrestrial geographic location region information** | | |
|---|---|---|---|
| | **Azimuth angle** | **Elevation angle** | **Radius** |
| Region 1 | 0° | 30° | 10 km |
| Region 2 | 90° | 30° | 10 km |
| Region 3 | 180° | 60° | 10 km |
| Region 4 | 270° | 60° | 10 km |

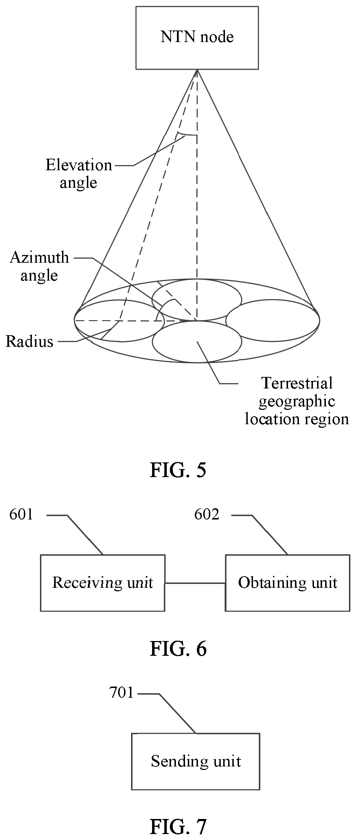

Table 3 shows another representation manner of the terrestrial geographic location region information. A terrestrial geographic location region may be represented by an elevation angle and an azimuth angle of the region relative to the NTN node and a radius of the region. Specifically, as shown in FIG. 5, when a satellite is stationary relative to the ground, a point that is on the ground and that is directly below the NTN node is a subsatellite point. A line connecting the NTN node and the subsatellite point is perpendicular to the ground. There is an included angle between a line connecting the NTN node and a center point of a terrestrial geographic location region and the line connecting the NTN node and the subsatellite point, and the included angle is an elevation angle of the terrestrial geographic location region relative to the NTN node. There is an included angle between a ray toward a due north direction and a line connecting the center point of the terrestrial geographic location region and the subsatellite point, and the included angle is an azimuth angle of the terrestrial geographic location region relative to the NTN node. A specific location of the center point of the region may be determined based on the two included angles, and a range of the terrestrial geographic location region may be determined based on a radius of the region.

In actual application, the center point of the terrestrial geographic location region may be further determined based on an angle and a distance relative to a center point of an earth-moving cell or an earth-fixed cell. This is not specifically limited herein.

In this embodiment of this application, because a satellite is in a stationary state relative to an earth-moving cell, in the earth-moving cell, an elevation angle and an azimuth angle of the NTN node relative to the terrestrial geographic location region remain unchanged. However, the satellite is in a moving state relative to an earth-fixed cell. Therefore, in the earth-fixed cell, an elevation angle and an azimuth angle of the NTN node relative to the terrestrial geographic location region keep changing. In this case, in the earth-fixed cell, a specific location of the terrestrial geographic location region cannot be represented by using the elevation angle and the azimuth angle of the NTN node relative to the terrestrial geographic location region, and the specific location can only be represented by using an angle and a distance of the center point of the terrestrial geographic location region relative to a center point of the cell or by using the reference coordinates of the center point of the terrestrial geographic location region.

It may be understood that calculating the range of the terrestrial geographic location region based on the radius is merely an example, and the range of the terrestrial geographic location region may alternatively be calculated based on a side length or preconfigured. This is not specifically limited herein. In actual application, any point in the terrestrial geographic location region may alternatively be used as the reference point to represent the terrestrial geographic location region. This is not specifically limited herein.

In some possible implementations, the target parameter may be an EPRE scale factor, an EPRE offset, or another EPRE-related parameter. This is not specifically limited herein. In other words, the EPRP in Table 1 may be replaced with an EPRE scale factor, an EPRE offset, or another EPRE-related parameter.

For example, the target parameter may be the EPRE scale factor. The broadcast information further includes preset EPRE. The EPRE may be EPRE of one of the terrestrial geographic location regions, or may be EPRE corresponding to a subsatellite point region of the NTN node. This is not specifically limited herein. The EPRE scale factor indicates a proportional relationship between EPRE in each terrestrial geographic location region and the preset EPRE. Details are shown in Table 4.

**Table 4**

| **Terrestrial geographic location region** | **EPRE scale factor** |
|---|---|
| Region 1 | 0.8 |
| Region 2 | 0.6 |
| Region 3 | 1.5 |
| Region 4 | 2.0 |

In Table 4, the broadcast information includes an identifier of a terrestrial geographic location region and a EPRE scale factor corresponding to the region. For example, if a value of the preset EPRE included in the broadcast information is 20 dBm, and the EPRE scale factor corresponding to region 1 is 0.8, EPRE corresponding to region 1 may be calculated based on the scale factor and the preset EPRE, and is 16 dBm.

For another example, the target parameter is the EPRE offset. The broadcast information includes preset EPRE. The EPRE offset indicates a difference between each terrestrial geographic location region and the preset EPRE. Details are shown in Table 5.

**Table 5**

| **Terrestrial geographic location region** | **EPRE offset (dBm)** |
|---|---|
| Region 1 | 10 |
| Region 2 | 0 |
| Region 3 | -20 |
| Region 4 | -10 |

In Table 5, the broadcast information includes an identifier of a terrestrial geographic location region and an EPRE offset corresponding to the region. For example, if a value of the preset EPRE included in the broadcast information is 30 dBm, and the EPRE offset corresponding to region 3 is -20, in other words, a difference between the EPRE corresponding to region 3 and the preset EPRE is -20, the EPRE corresponding to region 3 may be obtained by adding the EPRE offset and the preset EPRE, and is 10 dBm.

In actual application, both the EPRE scale factor or the EPRE offset has a positive correlation with a distance from the NTN node to the reference point. Specifically, the distance from the NTN node to the reference point of a terrestrial geographic location satisfies: $d = \sqrt{{\left({x}^{s}-{x}^{u}\right)}^{2} + {\left({y}^{s}-{y}^{u}\right)}^{2} + {\left({z}^{s}-{z}^{u}\right)}^{2}}$

d is a distance between the terminal device and the NTN node. x^{s} is a coordinate of the NTN node on an x-coordinate axis in an earth coordinate system. y^{s} is a coordinate of the satellite on a y-coordinate axis in the earth coordinate system. z^{s} is a coordinate of the satellite on a z-coordinate axis in the earth coordinate system. The coordinates of the NTN node in the earth coordinate system may be deduced based on ephemeris information.

When the location of the terrestrial geographic location region is represented by the elevation angle and the azimuth angle, the distance from the NTN node to the reference point of the terrestrial geographic location satisfies: $d = \sqrt{{h}^{2} + {r}^{2} - 2 hr ∗ cos \left(x\right)}$

d represents the distance from the NTN node to the reference point of the terrestrial geographic location. *x* represents the elevation angle. *h* represents a satellite orbit altitude. *r* represents a radius of the earth. The EPRE scale factor corresponding to the terrestrial geographic location region is a ratio of the distance from the NTN node to the reference point of the terrestrial geographic location to a distance from the NTN node to a subsatellite point.

The earth coordinate system is a coordinate system established by using an earth sphere center as an origin, a straight line from the sphere center pointing to a 0-degree longitude on the equator as the x-coordinate axis, a straight line from the sphere center pointing to a 90-degree longitude east on the equator as the y-coordinate axis, and a straight line from the sphere center pointing to the north pole as the z-coordinate axis.

It may be understood that the EPRE scale factor included in Table 4 may be represented by the distance from the NTN node to the reference point of the terrestrial geographic location, or may be represented in another manner. This is not specifically limited herein. The EPRE offset included in Table 5 may be represented by the distance from the NTN node to the reference point of the terrestrial geographic location, or may be represented in another manner. This is not specifically limited herein.

In an implementation, the broadcast information further includes an emergency requirement level. When an emergency, for example, a fire, a flood, or an earthquake, occurs in a part of the terrestrial geographic location regions, more SSB power needs to be allocated to the region. Therefore, the broadcast information further includes different emergency requirement levels. Details are shown in Table 6.

**Table 6**

| **Terrestrial geographic location region** | **Emergency requirement level** | **EPRE (dBm)** |
|---|---|---|
| Region 1 | 1 | 2 |
| | 2 | 4 |
| | 3 | 6 |
| Region 2 | 1 | 5 |
| | 2 | 10 |
| | 3 | 15 |
| Region 3 | 1 | 10 |
| | 2 | 20 |
| | 3 | 30 |
| Region 4 | 1 | 15 |
| | 2 | 30 |
| | 3 | 45 |

As shown in Table 6, the broadcast information sent by the NTN node to the terminal device includes a mapping relationship among a terrestrial geographic location region, an emergency requirement level of the region, and an SSB EPRE of the region. The broadcast information includes corresponding values of EPRE at different emergency requirement levels in a terrestrial geographic location region.

In actual application, the broadcast message may further include a preset EPRE, and the target parameter may be an EPRE scale factor, an EPRE offset, or another EPRE-related parameter. This is not specifically limited herein. It may be understood that the EPRP in Table 6 may be replaced with an EPRE scale factor, an EPRE offset, or another EPRE-related parameter.

302: The NTN node sends the ephemeris information to the terminal device.

The NTN node further sends the ephemeris information to the terminal device, to enable the terminal device to determine coordinates and speed of the NTN node or an orbit on which the NTN node is located. Running status, such as time, position, and speed, of the satellite can be accurately calculated, predicted, described, and tracked based on the ephemeris information, and the ephemeris information can express precise parameters of a flight object, for example, a celestial body, a satellite, or a spacecraft.

It may be understood that, in this embodiment, when the terrestrial geographic location region is represented by the reference coordinates, the terminal device may determine the terrestrial geographic location region without relying on the ephemeris information. Therefore, step 302 may not be performed.

303: The terminal device determines the target region.

When the terrestrial geographic location region is represented by the reference coordinates, the terminal device determines, based on the GNSS of the terminal device, longitude and latitude coordinates of the terminal device. The terminal device determines, based on the coordinates of the terminal device and the terrestrial geographic location region information shown in Table 2, the target region in which the terminal device is located. For example, the coordinates of the terminal device are 120.1°E and 30°N. A distance from the coordinates to a center point of region 1 is approximately 9.6 km, and is less than a radius of region 1. Therefore, region 1 is the target region.

In actual application, both the coordinates of the terminal device and the coordinates of the terrestrial geographic location region reference point may be represented by coordinates in the earth coordinate system. The following uses geographic coordinates of the terminal device as an example. Similarly, a geographic coordinate representation of the reference point of the terrestrial geographic location region may be implemented with reference to a geographic coordinate representation of the terminal device.

The geographic coordinates of the terminal device may be represented as (*φ, θ*). *φ* represents longitude information of the terminal device. *θ* represents latitude information of the terminal device. Location information and the geographic coordinates of the terminal device in the earth coordinate system satisfy: ${x}^{u} = r ∗ sin \left(ϕ\right) ∗ cos \left(θ\right)$ ${y}^{u} = r ∗ sin \left(ϕ\right) ∗ sin \left(θ\right)$ ${z}^{u} = r ∗ cos \left(ϕ\right)$

x^{u} is a coordinate of the terminal device on the x-coordinate axis in the earth coordinate system. y^{u} is a coordinate of the terminal device on the y-coordinate axis in the earth coordinate system. z^{u} is a coordinate of the terminal device on the z-coordinate axis in the earth coordinate system. The location information of the terminal device in the earth coordinate system may be represented as (x^{u}, y^{u}, z^{u}), and r is the radius of the earth.

When the terrestrial geographic location region is represented by the elevation angle and the azimuth angle of the region relative to the NTN node, the terminal device determines an elevation angle and an azimuth angle of the terminal device relative to the NTN node based on the GNSS and the ephemeris information. The terminal device determines, based on the elevation angle and the azimuth angle of the terminal device relative to the NTN node and the terrestrial geographic location region information shown in Table 3, the target region in which the terminal device is located. For example, the azimuth angle of the terminal device relative to the NTN node is 86°, and the elevation angle is 29°. The terminal device calculates a distance from a center point of region 2 based on the two angles. If the distance is less than a radius of region 2, the terminal device determines region 2 as the target region.

304: The terminal device obtains a corresponding target parameter.

After determining the target region, the terminal device obtains, from the broadcast information, a value of the target parameter corresponding to the target region. For example, when the target parameter is the EPRE, the terminal device obtains, from Table 1 based on the target region, the EPRE corresponding to the target region. If the target region is region 1, the value of the EPRE is 10 dBm.

Optionally, 305: The terminal device calculates a downlink path loss.

The terminal device calculates the downlink path loss based on obtained SSB power and RSRP.

Optionally, 306: The terminal device sends the downlink path loss to the NTN node.

The terminal device reports, to the NTN node by using RRC signaling, the calculated downlink path loss. In actual application, the terminal device may alternatively report a calculation result to the NTN node by using dedicated signaling or other signaling. This is not specifically limited herein.

In this embodiment, step 305 to step 306 may be performed, or may not be performed. This is not specifically limited herein.

In this embodiment of this application, a mapping relationship between SSB power and the terrestrial geographic location region is broadcast in an NTN network, to enable the terminal device to calculate a path loss based on SSB power in a geographic region in which the terminal device is currently located. Therefore, SSB power of the satellite can be dynamically adjusted based on terrestrial geographic location regions within coverage to improve coverage performance.

The foregoing describes the communication method in embodiments of this application. The following describes the communication apparatus in embodiments of this application. Refer to FIG. 6. The communication apparatus in embodiments of this application may be a terminal device, or may be a component or an apparatus (for example, a processor, a chip, or a chip system) used in the terminal device, or may be a logical module or software that can implement all or some functions of the terminal device, and may implement a function of the terminal device in the foregoing methods. An embodiment of the communication apparatus includes:
a receiving unit 601, configured to receive broadcast information, where the broadcast information includes a corresponding value of a target parameter in one or more terrestrial geographic location regions; and
an obtaining unit 602, configured to obtain a first value based on a target region and the broadcast information, where the target region is the terrestrial geographic location region in which the terminal device is located, the first value is a corresponding value of the target parameter in the target region, and the first value indicates synchronization signal power corresponding to the target region.

Refer to FIG. 7. The communication apparatus in embodiments of this application may be an NTN node, or may be a component (for example, a processor, a chip, or a chip system) used in the NTN node, or may be a logical module or software that can implement all or some functions of the NTN node, and may implement a function of the NTN node in the foregoing method. An embodiment of the communication apparatus includes:
a sending unit 701, configured to send broadcast information, where the broadcast information includes a corresponding value of a target parameter in one or more terrestrial geographic location regions, and the value indicates synchronization signal power corresponding to the one or more terrestrial geographic location regions.

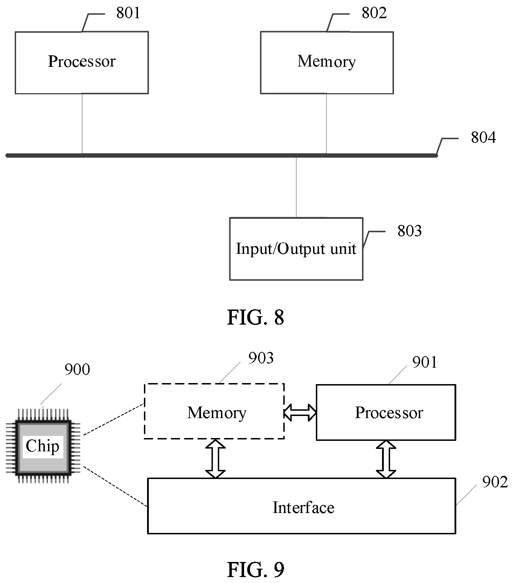

The following describes the communication apparatus provided in embodiments of this application. FIG. 8 is a diagram of a structure of a communication apparatus according to an embodiment of this application. The communication apparatus may be the terminal device or the network device in the foregoing method embodiments, or may be a chip, a chip system, a processor, or the like that supports the terminal device or the network device in implementing the foregoing method. The communication apparatus may be configured to implement the method described in the foregoing method embodiments. For details, refer to the descriptions in the foregoing method embodiments.

The communication apparatus may include one or more processors 801. The processor 801 is connected to a memory 802, an input/output unit 803, and a bus 804. The processor 801 may be a general-purpose processor, a dedicated processor, or the like. For example, the processor 801 may be a baseband processor or a central processing unit. The baseband processor may be configured to process a communication protocol and communication data. The central processing unit may be configured to: control the communication apparatus (for example, a base station, a baseband chip, a terminal, a terminal chip, a DU, or a CU), execute a software program, and process data of the software program.

Optionally, the communication apparatus may include one or more memories 802. The memory may store instructions. The instructions may be run on the processor 801, to cause the communication apparatus to perform the method described in the foregoing method embodiments. Optionally, the memory 802 may further store data. The processor 801 and the memory 802 may be disposed separately, or may be integrated together.

Optionally, the communication apparatus may further include a transceiver and an antenna. The transceiver may be referred to as a transceiver unit, a transceiver machine, a transceiver circuit, or the like, and is configured to implement a transceiver function. The transceiver may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

In another possible design, the processor 801 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 801 may store instructions, and the instructions are run on the processor 801, to cause the communication apparatus to perform the method described in the foregoing method embodiments. The instructions may be fixed in the processor 801. In this case, the processor 801 may be implemented by hardware.

In still another possible design, the communication apparatus may include a circuit. The circuit may implement a sending, receiving, or communication function of the communication device or the first terminal device in the foregoing method embodiments. The processor and the transceiver described in this embodiment of this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal-oxide-semiconductor (metal-oxide-semiconductor, NMOS), a P-type channel metal oxide semiconductor (positive channel metal-oxide-semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be a terminal device or a network device. However, a scope of the communication apparatus described in embodiments of this application is not limited thereto, and the structure of the communication apparatus may not be limited by FIG. 8. The communication apparatus may be an independent device or may be a part of a large device. For example, the communication apparatus may be:
(1) an independent integrated circuit IC, a chip, a chip system, or a subsystem;
(2) a set that has one or more ICs, where optionally, the IC set may alternatively include a storage component configured to store data and instructions;
(3) an ASIC, for example, a modem (KSK);
(4) a module that can be embedded in another device;
(5) a receiver machine, a terminal, an intelligent terminal, a cellular phone, a wireless device, a handheld device, a mobile unit, a vehicle-mounted device, a network device, a cloud device, an artificial intelligence device, or the like; or
(6) another item.

For a case in which the communication apparatus may be a chip or a chip system, refer to a diagram of a structure of a chip shown in FIG. 9. A chip 900 shown in FIG. 9 includes a processor 901 and an interface 902. Optionally, the chip may further include a memory 903. There may be one or more processors 901 and a plurality of interfaces 902.

When the chip is configured to implement a function of the network device or the terminal device in embodiments of this application,
the interface 902 is configured to receive or output a signal; and
the processor 901 is configured to perform a data processing operation of the network device or the terminal device.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features are combined with other features based on requirements. Correspondingly, the communication apparatus provided in embodiments of this application may also correspondingly implement these features or functions. Details are not described herein.

It should be noted that the processor in embodiments of this application may be an integrated circuit chip, and has a signal processing capability. In an implementation process, steps in the foregoing method embodiments may be implemented by a hardware integrated logic circuit in the processor or by instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories of the systems and methods described in this specification are intended to include but are not limited to these and any other suitable types of memories.

An embodiment of this application further provides a computer-readable storage medium, including instructions. When the instructions are run on a computer, the computer is caused to perform the method in the foregoing embodiments.

An embodiment of this application further provides a computer program product including instructions. When the computer program product runs on a computer, the computer is caused to perform the method in the foregoing embodiments.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (ROM, read-only memory), a random access memory (RAM, random access memory), a magnetic disk, or an optical disc.

All or some of the foregoing embodiments may be implemented by software, hardware, firmware, or any combination thereof. When software is used to implement the foregoing embodiments, all or some of the foregoing embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

## Claims

1. A communication method, wherein the method comprises:
receiving broadcast information, wherein the broadcast information comprises a corresponding value of a target parameter in one or more terrestrial geographic location regions; and
obtaining a first value based on a target region and the broadcast information, wherein the target region is the terrestrial geographic location region in which a terminal device is located, the first value is a corresponding value of the target parameter in the target region, and the first value indicates synchronization signal power corresponding to the target region.

2. The communication method according to claim 1, wherein the method further comprises:
receiving ephemeris information; and
obtaining the first value based on the target region and the broadcast information comprises:
determining the target region based on the ephemeris information, and terrestrial location information and terrestrial geographic location region information of the terminal device; and
obtaining the first value from the broadcast information based on the target region.

3. The communication method according to claim 1 or 2, wherein the terrestrial geographic location region is represented by reference coordinates.

4. The communication method according to claim 2, wherein the terrestrial geographic location region is represented by an elevation angle and an azimuth angle of the NTN node relative to the terrestrial geographic location region.

5. The communication method according to any one of claims 1 to 4, wherein the target parameter is energy per resource element EPRE, a scale factor, or an offset.

6. The communication method according to any one of claims 1 to 5, wherein the broadcast information further comprises a second value, the second value is a preset value, and the first value is used by the terminal device to calculate, based on the second value, the synchronization signal power corresponding to the target region.

7. The communication method according to any one of claims 1 to 6, wherein the broadcast information further comprises an emergency requirement level; and
that the broadcast information comprises the corresponding value of the target parameter in the one or more terrestrial geographic location regions comprises:
the broadcast information comprises corresponding values of the target parameter at different emergency requirement levels in the one or more terrestrial geographic location regions.

8. The communication method according to any one of claims 1 to 7, wherein the method further comprises:
calculating a downlink path loss based on the first value; and
sending the downlink path loss to the non-terrestrial network NTN node.

9. The communication method according to any one of claims 1 to 8, wherein the method further comprises:
receiving a synchronization signal and PBCH block from the NTN node.

10. A communication method, wherein the method comprises:
sending broadcast information, wherein the broadcast information comprises a corresponding value of a target parameter in one or more terrestrial geographic location regions, and the value indicates synchronization signal power corresponding to the one or more terrestrial geographic location regions.

11. The communication method according to claim 10, wherein the method further comprises:
sending ephemeris information, wherein the ephemeris information is used by a terminal device to determine a target region, and the target region is the terrestrial geographic location region in which the terminal device is located.

12. The communication method according to claim 10 or 11, wherein the terrestrial geographic location region is represented by reference coordinates.

13. The communication method according to claim 11, wherein the terrestrial geographic location region is represented by an elevation angle and an azimuth angle of an NTN node relative to the terrestrial geographic location region.

14. The communication method according to any one of claims 10 to 13, wherein the target parameter is energy per resource element EPRE, a scale factor, or an offset.

15. The communication method according to any one of claims 10 to 13, wherein the broadcast information further comprises a second value, the second value is a preset value, and the first value is used by the terminal device to calculate, based on the second value, synchronization signal power corresponding to the target region.

16. The communication method according to any one of claims 10 to 15, wherein the broadcast information further comprises an emergency requirement level; and
that the broadcast information comprises the corresponding value of the target parameter in the one or more terrestrial geographic location regions comprises:
the broadcast information comprises corresponding values of the target parameter at different emergency requirement levels in the one or more terrestrial geographic location regions.

17. The communication method according to any one of claims 10 to 16, wherein the method further comprises:
receiving a downlink path loss.

18. The communication method according to any one of claims 10 to 17, wherein the method further comprises:
sending a synchronization signal and PBCH block to the terminal device.

19. A communication apparatus, comprising a module or a unit configured to perform the method according to any one of claims 1 to 9.

20. A communication apparatus, comprising a module or a unit configured to perform the method according to any one of claims 10 to 18.

21. A communication apparatus, comprising:
a processor, configured to execute a program, to cause the communication apparatus to perform the method according to any one of claims 1 to 9.

22. A communication apparatus, comprising:
a processor, configured to execute a program, to cause the communication apparatus to perform the method according to any one of claims 10 to 18.

23. A communication system, comprising:
a communication apparatus configured to perform the method according to any one of steps 1 to 9, and a communication apparatus configured to perform the method according to any one of claims 10 to 18.

24. A computer-readable storage medium, comprising instructions, wherein when the instructions are run on a computer, the computer is caused to perform the method according to any one of claims 1 to 9, or the computer is caused to perform the method according to any one of claims 10 to 18.

25. A computer program product comprising instructions, wherein when the computer program product runs on a computer, the computer is caused to perform the method according to any one of claims 1 to 9, or the computer is caused to perform the method according to any one of claims 10 to 18.
